# EUROPEAN PATENT APPLICATION

(11) **EP 2 902 253 A1**
(43) Date of publication of application: **05.08.2015**
(21) Application number: 13840372.0
(22) Date of filing: 23.08.2013
(51) Int. Cl.: B60N 2/42, A47C 7/40, B60N 2/48

(54) **HEADREST AND VEHICLE SEAT PROVIDED WITH SAME**

(30) Priority: 25.09.2012 JP 2012211327
(71) Applicant: TOYOTA JIDOSHA KABUSHIKI KAISHA, Toyota-shi, Aichi-ken, 471-8571 (JP)
(72) Inventor: ISHIMOTO, Manabu, Toyota-shi Aichi 471-8571 (JP); HAGA, Kouichiro, Toyota-shi Aichi 471-8571 (JP)
(74) Representative: Intès, Didier Gérard André
(86) International application number: PCT/JP2013/072609
(87) International publication number: WO 2014/050391

(57) **Abstract**

It is obtained a headrest and a vehicle seat provided therewith, that can reduce load to a neck portion of a vehicle occupant at a time of a rear collision while ensuring NV performance. A first mass body (40) and a second mass body (42) are embedded in an elastically-deformable headrest pad (20), at an inner side of a headrest skin (22) of a vehicle seat (10). The first mass body (40) and the second mass body (42) are disposed lined-up apart at left and right sides in a seat transverse direction with respect to a seat transverse direction central line (CL) at the headrest (14). A product of mass of the first mass body (40) and a distance from a center of gravity of the headrest (14) to a center of gravity (G1) of the first mass body (40), and a product of mass of the second mass body (42) and a distance from the center of gravity of the headrest (14) to a center of gravity (G2) of the second mass body (42), are set to be equivalent.

## Description

### Technical Field

The present invention relates to a headrest and to a vehicle seat provided therewith.

### Background Art

A vehicle seat in which a dynamic damper is structured by integrally supporting a mass body within a pad is disclosed in following Patent Document 1. Further, a headrest in which a dynamic damper is structured by providing an elastic resin material that is injected into a molding bag and foam-molded and a weight that is fixedly placed with respect to the molding bag, is disclosed in following Patent Document 2. In these prior art, because vibrations are damped by the dynamic damper, the NV performance (noise and vibration performance) can be improved.

### Prior Art Documents

### Patent Documents

Patent Document 1: Japanese Patent Application Laid-Open No. 2001-161489
Patent Document 2: Japanese Patent Application Laid-Open No. 2010-194246

### SUMMARY OF INVENTION

### Technical Problem

However, these prior art do not disclose the point of reducing load to the neck portion of a vehicle occupant at the time of a rear collision (hereinafter called "at the time of a rear collision"), and there is room for improvement with regard to this point.

In consideration of the above-described circumstances, an object of the present invention is to provide a headrest and a vehicle seat provided therewith, that can reduce load to the neck portion of a vehicle occupant at the time of a rear collision while ensuring the NV performance.

### Solution to Problem

A headrest relating to a first aspect of the present invention comprises: a headrest pad that is disposed at an inner side of a headrest skin and that is elastically deformable; a first mass body that is supported by the headrest pad; and a second mass body that is supported by the headrest pad, and that is disposed apart from the first mass body.

In accordance with the above-described structure, at the inner side of the headrest skin of the vehicle seat, the first mass body and the second mass body are supported by the headrest pad that is elastically deformable. Namely, a dynamic damper, that has the headrest pad, the first mass body and the second mass body, is structured. Therefore, seat vibrations are suppressed by setting the frequency characteristic of the dynamic damper such that the dynamic damper works in the frequency band of seat vibrations for which suppression is desired.

Further, because the two mass bodies that are the first mass body and the second mass body are disposed, the mass per each mass body can be made to be small. Due thereto, at the time of a rear collision, the amplitudes of the first mass body and the second mass body in the seat longitudinal direction are respectively suppressed due to the lowering of the respective inertial forces of the first mass body and the second mass body. Accordingly, load to the neck portion of the vehicle occupant, that is caused by vibration of the first mass body and the second mass body in the seat longitudinal direction, is reduced.

In a second aspect of the present invention, in the headrest relating to the first aspect, the first mass body and the second mass body are disposed lined-up apart at left and right sides in a seat transverse direction with respect to a seat transverse direction central line at the headrest.

In accordance with the above-described structure, the first mass body and the second mass body are disposed lined-up apart at left and right sides in the seat transverse direction with respect to the seat transverse direction central line at the headrest. Therefore, at the time of a rear collision, when the head portion of the vehicle occupant is pushed-against the headrest and is displaced toward between the first mass body and the second mass body, the first mass body and the second mass body can be displaced in directions of moving away from one another.

In a third aspect of the present invention, in the headrest relating to the second aspect, a product of mass of the first mass body and a distance from a center of gravity of the headrest to a center of gravity of the first mass body, and a product of mass of the second mass body and a distance from the center of gravity of the headrest to a center of gravity of the second mass body, are set to be equivalent.

In accordance with the above-described structure, the balance at the left and the right of the headrest is maintained good.

In a fourth aspect of the present invention, in the headrest relating to any one aspect of the first aspect through the third aspect, respective resonance frequencies of the first mass body and the second mass body, that are respectively supported by headrest pad, differ.

In accordance with the above-described structure, because the respective resonance frequencies of the first mass body and the second mass body, that are respectively supported by the headrest pad, differ, the frequency band of seat vibrations that can be suppressed can be broadened.

In a fifth aspect of the present invention, in the headrest relating to any one aspect of the first aspect through the fourth aspect, the headrest pad has a first cushion material that supports the first mass body and the second mass body and is elastically deformable, and a second cushion material whose elastic coefficient is higher than that of the first cushion material.

In accordance with the above-described structure, the first cushion material of the headrest pad is elastically deformable, and the first mass body and the second mass body are supported by this first cushion material. Namely, a dynamic damper, that has the first cushion material, the first mass body and the second mass body, is structured, and seat vibrations can be suppressed by this dynamic damper.

Further, the elastic coefficient of the second cushion material of the headrest pad is set to be higher than that of the first cushion material. Therefore, at the time of a rear collision, owing to the second cushion material, the supporting rigidity of the headrest with respect to the head portion of the vehicle occupant is increased, and the respective amplitudes of the first mass body and the second mass body also are suppressed. Further, due to the latter, load to the neck portion of the vehicle occupant, that is caused by respective vibrations of the first mass body and the second mass body in the seat longitudinal direction, is reduced.

In a sixth aspect of the present invention, in the headrest relating to the fifth aspect, the first cushion material has a first overlap portion that is set at a position that overlaps the first mass body as seen in a seat front view, and a second overlap portion that is set at a position that overlaps the second mass body as seen in a seat front view, and the second cushion material has a third overlap portion that is set at a position that overlaps the first mass body and the first overlap portion as seen in a seat front view, and a fourth overlap portion that is set at a position that overlaps the second mass body and the second overlap portion as seen in a seat front view.

In accordance with the above-described structure, in a case in which the headrest vibrates in the seat longitudinal direction at the time when the seat vibrates usually, the first mass body is displaced while elastically deforming the first overlap portion, and the second mass body is displaced while elastically deforming the second overlap portion. For these reasons, vibrations are damped. On the other hand, in a case in which the first mass body starts to vibrate in the seat longitudinal direction at an amplitude that is greater than or equal to the amplitude at the time when the seat vibrates usually, the third overlap portion suppresses vibration of the first mass body. Further, in a case in which the second mass body starts to vibrate in the seat longitudinal direction at an amplitude that is greater than or equal to the amplitude at the time when the seat vibrates usually, the fourth overlap portion suppresses vibration of the second mass body. For these reasons, at the time of a rear collision, the respective amplitudes of the first mass body and the second mass body in the seat longitudinal direction are suppressed effectively, and therefore, load to the neck portion of the vehicle occupant, that is caused by respective vibrations of the first mass body and the second mass body in the seat longitudinal direction, is effectively reduced.

In a seventh aspect of the present invention, in the headrest relating to the fifth aspect or the sixth aspect, the first cushion material covers an entire periphery of a peripheral edge of the first mass body, and covers an entire periphery of a peripheral edge of the second mass body.

In accordance with the above-described structure, the first cushion material covers the entire peripheries of the respective peripheral edges of the first mass body and the second mass body. Therefore, setting of the frequency characteristic of the dynamic damper is easy as compared with, for example, a structure in which the first mass body and the second mass body are covered by the first cushion material and the second cushion material. Namely, seat vibrations are suppressed by setting the frequency characteristic of the dynamic damper by adjusting the respective masses of the first mass body and the second mass body or the rigidity, volume, shape or the like of the first cushion material, such that the dynamic damper works in the frequency band of the seat vibrations for which suppression is desired.

A vehicle seat relating to an eighth aspect of the present invention comprises: a seat cushion on which a vehicle occupant sits; a seat back that is supported at a rear end portion of the seat cushion; and the headrest relating to any one aspect of the first aspect through the seventh aspect that is disposed at an upper end portion of the seat back and supports a head portion of the vehicle occupant.

In accordance with the above-described structure, the operation of the headrest relating to the first aspect of the present invention is obtained in the vehicle seat. Advantageous Effects of Invention

As described above, in accordance with the present invention, there is the excellent effect of being able to reduce load to the neck portion of a vehicle occupant at the time of a rear collision, while ensuring the NV performance.

### BRIEF DESCRIPTION OF DRAWINGS

Fig. 1 is a cross-sectional view that is seen from the front of a seat and that shows a headrest of a vehicle seat relating to a first embodiment (a drawing that, at an upper portion of the headrest, is cut at a front surface position of a resin cover, and, at a lower portion of the headrest, is cut at front surface positions of leg portions of a headrest stay).
Fig. 2 is a cross-sectional view along line 2-2 of Fig. 1.
Fig. 3 is a cross-sectional view along line 3-3 of Fig. 1.
Fig. 4 is a graph showing the relationship between vibration level and frequency of the headrest of the vehicle seat relating to the first embodiment.
Fig. 5 is a graph showing the relationship between maximum vibration magnification factor and amount of fluctuation in the spring constant of a main vibration system of the vehicle seat relating to a modified example of the first embodiment.

### DESCRIPTION OF EMBODIMENTS

### [First Embodiment]

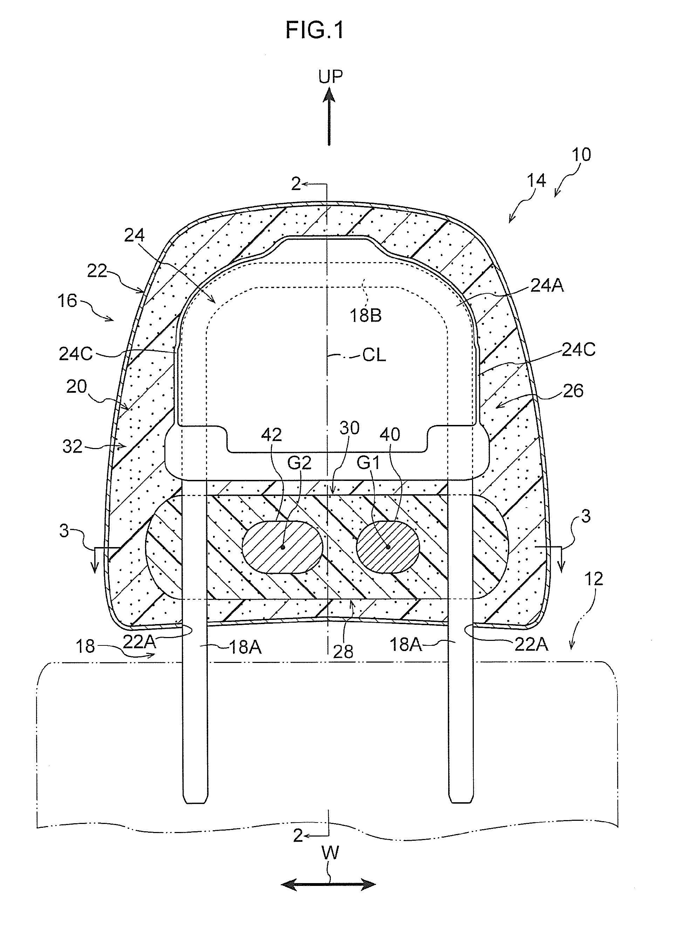

A first embodiment of the present invention is described by using Fig. 1 through Fig. 5. Note that arrow FR that is shown appropriately in these drawings indicates the vehicle front side, arrow UP indicates the vehicle upper side, and arrow W indicates the vehicle transverse direction. Further, in the drawings, the vehicle longitudinal direction and the seat longitudinal direction are the same direction, the vehicle vertical direction and the seat vertical direction are the same direction, and the vehicle transverse direction and the seat transverse direction are the same direction.

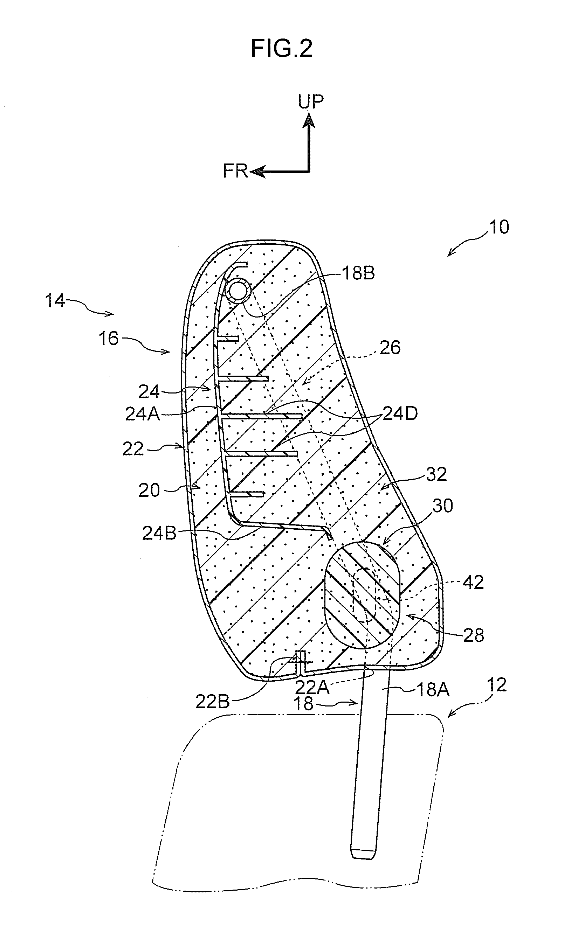

A headrest of a vehicle seat relating to the present embodiment is shown in Fig. 1 in a cross-sectional view seen from the front of the seat, and a cross-sectional view along line 2-2 of Fig. 1 is shown in Fig. 2. A vehicle seat 10 shown in these drawings has an unillustrated seat cushion that is mounted in an automobile and on which a vehicle occupant sits. A seat back 12 is reclinably supported at the rear end portion of the seat cushion. Note that, in Fig. 1 and Fig. 2, only the upper end portion of the seat back 12 is shown by the two-dot chain line. A headrest 14 that supports the head portion of the vehicle occupant is disposed at the upper end portion of the seat back 12.

The headrest 14 is structured to include a headrest main body 16 that is shaped as a pillow and supports the head portion of the vehicle occupant, and a headrest stay 18 that extends toward the vehicle lower side from the bottom surface of this headrest main body 16.

The headrest stay 18 is a structure in which a pipe made of metal is formed into an upside-down U-shape, and has a pair of left and right leg portions 18A. The pair of left and right leg portions 18A are supported at the seat back 12 by being inserted into an unillustrated headrest support of the seat back 12. Due thereto, the headrest 14 is supported at the seat back 12. The leg portions 18A extend in the seat height direction, and the upper portion sides thereof are disposed within the headrest main body 16. Further, the regions, that are disposed at the interior of the headrest main body 16, of the leg portions 18A have curved portions at the lower end portions thereof, and the regions, that are further toward the seat upper side than these curved portions, are inclined slightly forward toward the seat front side. Further, the upper ends of the leg portions 18A are connected in the seat transverse direction by a connecting portion 18B.

The headrest main body 16 has a headrest pad 20 that structures the cushion portion of the headrest main body 16 and is elastically deformable, a headrest skin (cover) 22 that covers the headrest pad 20, and a resin cover 24 that is embedded within the headrest pad 20. Stay insert-through holes 22A, that are for the leg portions 18A of the headrest stay 18 to be inserted therethrough, are formed in the lower end portion of the headrest skin 22. As shown in Fig. 2, the seat front side of the stay insert-through holes 22A is a sewn-together portion 22B.

The resin cover 24 (also called "resin pad", "insert") is disposed at the upper portion side and the seat front side of the headrest stay 18. This resin cover 24 has a front wall 24A whose obverse faces toward the seat front side. A bottom wall 24B that extends toward the seat rear side is formed from the lower end portion of the front wall 24A. Further, side walls 24C (see Fig. 1) that extend toward the seat rear side are formed from the end portions at the seat transverse direction both sides of the front wall 24A.

Further, although detailed illustration thereof is omitted, an anchor portion that is anchored on the headrest stay 18 is formed at the resin cover 24. Moreover, plural ribs 24D that extend in the seat transverse direction, and plural ribs (not illustrated) that extend in the seat vertical direction, are formed at the surface, that faces toward the seat rear side, of the front wall 24A.

The headrest pad 20 that is shown in Fig. 1 and Fig. 2 has a first urethane 30 (a "spring element" in the broad sense) that serves as a first cushion material and is elastically deformable, and a second urethane 32 that serves as a second cushion material and whose elastic coefficient is higher (the second urethane 32 is harder) than that of the first urethane 30. Both the first urethane 30 and the second urethane 32 are disposed at the inner side of the headrest skin 22, and are formed by foam-molding urethane. Further, in the present embodiment, the first urethane 30 (inner side foamed urethane) is embedded in the second urethane 32 (outer side foamed urethane).

As shown in Fig. 1, the first urethane 30 is disposed at the seat lower side of the resin cover 24, and the seat transverse direction is the length direction thereof, and both end portions in the seat transverse direction of the first urethane 30 are fixed, by the adhesive force of the urethane itself, to the leg portions 18A of the headrest stay 18. Namely, the first urethane 30 spans between the pair of left and right leg portions 18A of the headrest stay 18.

A first mass body 40 and a second mass body 42 are embedded in the length direction intermediate portion of the first urethane 30, and the first mass body 40 and the second mass body 42 are disposed so as to be lined-up apart at the left and right sides in the seat transverse direction with respect to a seat transverse direction central line CL. Namely, the respective peripheral edges of the first mass body 40 and the second mass body 42 are covered, over the entire peripheries thereof, by the first urethane 30, and the first mass body 40 and the second mass body 42 are respectively supported by the first urethane 30. Further, in the present embodiment, the peripheral edge of the first mass body 40 and the peripheral edge of the second mass body 42 are, over the respective entire peripheries (entire regions) thereof, joined to the first urethane 30.

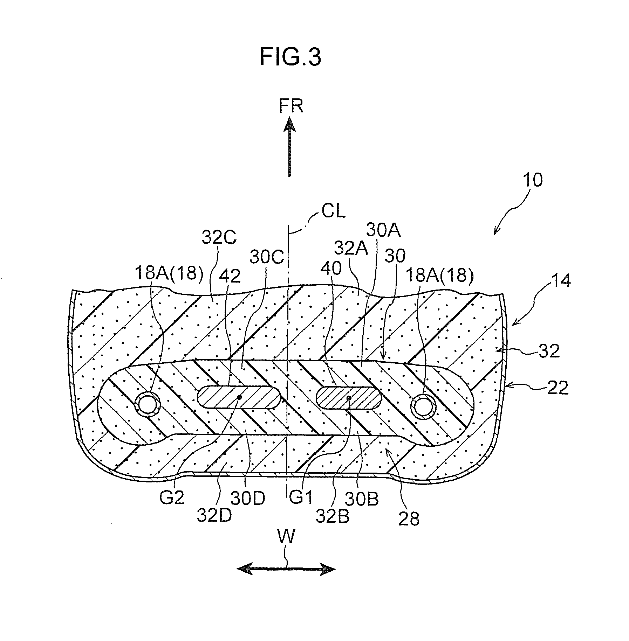

The first urethane 30 has first overlap portions 30A, 30B (see Fig. 3) that are set at positions overlapping the first mass body 40 as seen in a seat front view. A cross-sectional view along line 3-3 of Fig. 1 is shown in Fig. 3. In this Fig. 3, among the pair of front and rear first overlap portions 30A, 30B, the first overlap portion that is set at the seat front side with respect to the first mass body 40 is indicated by reference numeral 30A, and the first overlap portion that is set at the seat rear side with respect to the first mass body 40 is indicated by reference numeral 30B. Further, the first urethane 30 has second overlap portions 30C, 30D that are set at positions overlapping the second mass body 42 as seen in a seat front view. In Fig. 3, among the pair of front and rear second overlap portions 30C, 30D, the second overlap portion that is set at the seat front side with respect to the second mass body 42 is indicated by reference numeral 30C, and the second overlap portion that is set at the seat rear side with respect to the second mass body 42 is indicated by reference numeral 30D.

The volume of the second urethane 32 is set to be greater than the volume of the first urethane 30. Further, the second urethane 32 has third overlap portions 32A, 32B that are set at positions overlapping the first mass body 40 and the first overlap portions 30A, 30B as seen in a seat front view. In Fig. 3, the third overlap portion that is set at the seat front side with respect to the first mass body 40 and the first overlap portions 30A, 30B is indicated by reference numeral 32A, and the third overlap portion that is set at the seat rear side is indicated by reference numeral 32B, respectively. Further, the second urethane 32 has fourth overlap portions 32C, 32D that are set as positions overlapping the second mass body 42 and the second overlap portions 30C, 30D as seen in a seat front view. In Fig. 3, the fourth overlap portion that is set at the seat front side with respect to the second mass body 42 and the second overlap portions 30C, 30D is indicated by reference numeral 32C, and the fourth overlap portion that is set at the seat rear side is indicated by reference numeral 32D, respectively.

Here, the setting of the respective elastic coefficients at the first urethane 30 and the second urethane 32 that are shown in Fig. 1 and Fig. 2 is described by using an example. In the present embodiment, as an example, a material having a higher elastic coefficient than the material of the first urethane 30 is used for the second urethane 32. However, the same material as the first urethane 30 may be used for the second urethane 32, and the foaming ratio of the second urethane 32 may be set to be lower than the foaming ratio of the first urethane 30. Further, the spring constant of the first urethane 30 is set to a spring constant that is optimal for addressing the NV in a case of assuming vibration at usual times, i.e., as an example, in a case in which the amplitude of the second mass body 42, that is the heavier among the first mass body 40 and the second mass body 42, is less than a predetermined value (a region of small displacement). In contrast, the spring constant of the second urethane 32 is set to a spring constant that is optimal for addressing a rear collision in a case of assuming a collision, i.e., as an example, in a case in which the amplitude of the second mass body 42 is greater than or equal to the predetermined value (a region of large displacement). By the way, the spring characteristic of the second urethane 32 may be set in consideration of a range of spring constants that are comfortable in cases of supporting the head portion of the vehicle occupant.

As shown in Fig. 1 and Fig. 3, the first mass body 40 and the second mass body 42 are disposed between the pair of left and right leg portions 18A of the headrest stay 18, and are set at positions that overlap that pair of left and right leg portions 18A as seen in the seat side view shown in Fig. 2. Note that, in Fig. 2, only the second mass body 42 is illustrated by the dashed line, but the position of placement of the first mass body 40 (see Fig. 1) as seen in a seat side view is set to a position that coincides with the position of placement of the second mass body 42 as seen in a seat side view. Further, in the present embodiment, the center of gravity (the center) of the first mass body 40 (see Fig. 1) and the center of gravity (the center) of the second mass body 42 overlap the pair of left and right leg portions 18A as seen in a seat side view.

The projected surface areas, as seen in a seat front view, of the portions of the first mass body 40 and the second mass body 42 that are shown in Fig. 1, which portions contact the first urethane 30, are set to be larger than the projected surface areas, as seen in a seat side view, of the aforementioned contacting portions. Therefore, at the first urethane 30, the rigidity, with respect to displacement in the seat longitudinal direction, of the first mass body 40 is set to be higher than the rigidity, with respect to displacement in the seat transverse direction, of the first mass body 40, and the rigidity, with respect to displacement in the seat longitudinal direction, of the second mass body 42 is set to be higher than the rigidity, with respect to displacement in the seat transverse direction, of the second mass body 42. In other words, at the first mass body 40 and the second mass body 42 that are supported by the first urethane 30, the resonance frequencies in the seat longitudinal direction are set to be higher than the resonance frequencies in the seat transverse direction.

Further, the respective resonance frequencies of the first mass body 40 and the second mass body 42, that are respectively supported by the first urethane 30, differ. Concretely, in the present embodiment, by setting the mass of the second mass body 42 to be larger than the mass of the first mass body 40, the resonance frequency of the second mass body 42 is set to be lower than the resonance frequency of the first mass body 40.

Further, in the present embodiment, the first mass body 40 that is light is set at a position whose distance from the seat transverse direction central line CL is longer than that of the second mass body 42 that is heavy, so that the center of gravity position of the headrest 14 does not tend toward the left or the right. Concretely, the product of the mass of the first mass body 40 and the distance from the center of gravity (not shown) of the headrest 14 to a center of gravity G1 of the first mass body 40, and the product of the mass of the second mass body 42 and the distance from the center of gravity of the headrest 14 to a center of gravity G2 of the second mass body 42, are set to be equivalent (the same in the present embodiment). Note that, although the center of gravity of the headrest 14 is not illustrated, it is set at a seat transverse direction central position.

The structure of the present embodiment can be said to be a structure having a main vibration system, in which a seat skeleton portion of the vehicle seat 10 that is disposed at the vehicle floor is the spring and in which the entire headrest 14 is the mass, and having plural dynamic dampers having a spring and a mass at the headrest 14.

### (Method of Manufacturing Headrest)

A method of manufacturing the headrest 14 is described next.

First, the resin cover 24 is mounted to the headrest stay 18 shown in Fig. 1 and Fig. 2. Next, the first mass body 40 and the second mass body 42 are set between the leg portions 18A of the headrest stay 18, with respect to a stay assembly 26 that has the resin cover 24 and the headrest stay 18 that are shown in Fig. 1. Then, due to the raw material of the first urethane 30 being supplied and foam-molded so as to connect the first mass body 40 and the second mass body 42 and the leg portions 18A at the sides thereof (first-stage foaming step), the first mass body 40 and the second mass body 42 are fixed to the leg portions 18A.

Next, the headrest skin 22, that is in a state before being sewn at the sewn-together portion 22B shown in Fig. 2, is hung upside-down, and the stay assembly 26 is, in an upside-down posture, inserted into this headrest skin 22 from the upper side. Then, the leg portions 18A of the headrest stay 18 are inserted through the stay insert-through holes 22A. In this state, due to the raw material of the second urethane 32 being injected and foam-molded in the interior of the headrest skin 22 (second-stage foaming step), the headrest pad 20 is formed. Finally, the headrest skin 22 is sewn at the sewn-together portion 22B.

In a case of applying such a method, the first mass body 40 and the second mass body 42 are fixed to the leg portions 18A in the first-stage foaming step. Therefore, in the second-stage foaming step, a situation in which the first mass body 40 and the second mass body 42 fall-out from their planned placement positions, or the like, can be avoided. Further, the present embodiment is not a form in which the first mass body 40 and the second mass body 42 are mounted by using a mounting bracket and a fastening tool, and therefore, the number of assembly steps and the number of parts are reduced.

### (Operation/Effects)

### Operation and effects of the above-described embodiment are described next.

In accordance with the structure of the present embodiment, the first mass body 40 and the second mass body 42 are supported by the headrest pad 20 that is elastically deformable, at the inner side of the headrest skin 22 of the vehicle seat 10 that is shown in Fig. 1. Namely, a dynamic damper 28, that has the headrest pad 20, the first mass body 40 and the second mass body 42, is structured. Therefore, seat vibrations are suppressed by setting the frequency characteristic of the dynamic damper 28 such that the dynamic damper 28 works in the frequency band of seat vibrations for which suppression is desired.

Further, in the present embodiment, because the two mass bodies that are the first mass body 40 and the second mass body 42 are disposed, the mass per each of the mass bodies can be made to be small. Due thereto, at the time of a rear collision, the amplitudes of the first mass body 40 and the second mass body 42 in the seat longitudinal direction are respectively suppressed due to the lowering of the respective inertial forces of the first mass body 40 and the second mass body 42. Accordingly, load to the neck portion of the vehicle occupant, that is caused by vibrations of the first mass body 40 and the second mass body 42 in the seat longitudinal direction, is reduced.

The load to the neck portion of the vehicle occupant at the time of a rear collision is described further here. The smaller the difference between the acceleration that is applied to the head portion of a vehicle occupant and the acceleration that is applied to the chest portion, the smaller the load to the neck portion of the vehicle occupant at the time of a rear collision.

Examining the phenomena at the time of a rear collision, in the initial stage at the time when a vehicle sustains a rear collision, the headrest 14 shown in Fig. 1 and Fig. 2 is pushed-out, together with the seat back 12, toward the seat front side. At this time, the first mass body 40 and the second mass body 42 attempt to rest at their initial positions due to inertia, and therefore, there becomes a state in which the first urethane 30 deforms and the first mass body 40 and the second mass body 42 are swung toward the seat rear side. Then, in a case in which the head portion of the vehicle occupant starts to be displaced toward the headrest 14 side due to the chest portion of the vehicle occupant being pushed by the seat back 12 and being displaced toward the seat front side, the greater the amplitudes of the first mass body 40 and the second mass body 42 toward the seat rear side, the smaller the pushing force of the headrest 14 with respect to the head portion of the vehicle occupant. In other words, the difference between the acceleration that is applied to the head portion of the vehicle occupant and the acceleration that is applied to the chest portion becomes large, and the load to the neck portion of the vehicle occupant becomes large.

However, in the present embodiment, as described above, the amplitudes of the first mass body 40 and the second mass body 42 in the seat longitudinal direction are respectively suppressed due to the lowering of the respective inertial forces of the first mass body 40 and the second mass body 42. Therefore, the difference between the acceleration that is applied to the head portion of the vehicle occupant and the acceleration that is applied to the chest portion also is suppressed, and therefore, the load to the neck portion of the vehicle occupant is reduced.

Further, in the present embodiment, as shown in Fig. 1, the first mass body 40 and the second mass body 42 are disposed so as to be lined-up apart at the left and right sides in the seat transverse direction with respect to the seat transverse direction central line CL at the headrest 14. Therefore, when, at the time of a rear collision, the head portion of the vehicle occupant is pushed-against the headrest 14 and is displaced toward between the first mass body 40 and the second mass body 42, the first mass body 40 and the second mass body 42 can be displaced in directions of moving apart from one another (toward the vehicle transverse direction outer sides).

Further, in the present embodiment, the product of the mass of the first mass body 40 and the distance from the center of gravity (not shown) of the headrest 14 to the center of gravity G1 of the first mass body 40, and the product of the mass of the second mass body 42 and the distance from the center of gravity of the headrest 14 to the center of gravity G2 of the second mass body 42, are set to be equivalent. Therefore, the moment, that relates to the center of gravity G1 of the first mass body 40 and is centered around the center of gravity of the headrest 14, and the moment, that relates to the center of gravity G2 of the second mass body 42 and is centered around the center of gravity of the headrest 14, are in equilibrium at the left and the right. Namely, the left/right balance of the headrest 14 is maintained good.

Moreover, in the present embodiment, due to the mass of the first mass body 40 and the mass of the second mass body 42 being different, the respective resonance frequencies of the first mass body 40 and the second mass body 42, that are respectively supported by the first urethane 30, differ. Therefore, the frequency band of seat vibrations that can be suppressed can be broadened.

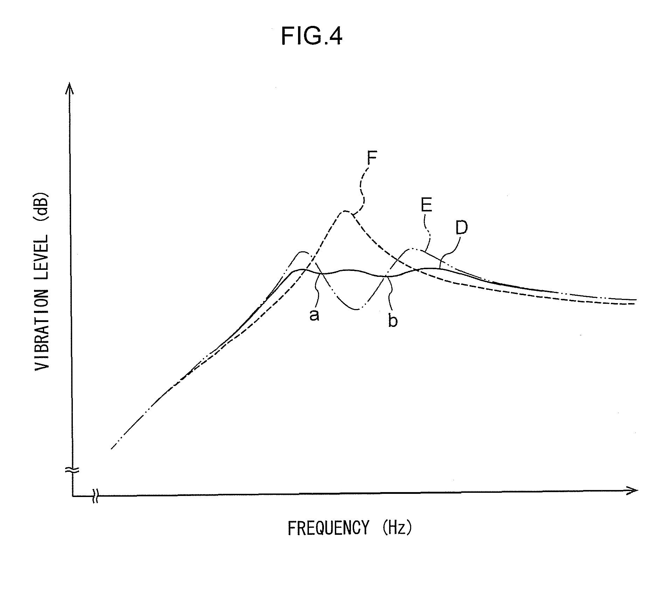

A graph comparing the NV performance in a case of applying the structure relating to the present embodiment and in a case of applying a comparative structure is shown in Fig. 4. Note that the magnitude of the vibration level is plotted on the vertical axis, and frequency is plotted on the horizontal axis. Solid line D shows the characteristic in a case in which the structure relating to the present embodiment is applied, and point a and point b are the respective resonance frequencies of the first mass body and the second mass body that have been set to be different from one another. In contrast, two-dot chain line E shows the characteristic in a case in which a structure, in which one mass body is disposed instead of the first mass body and the second mass body, is applied. Note that the mass of the mass body in the structure whose characteristic is shown by the two-dot chain line E is equal to the sum of the respective masses of the first mass body and the second mass body of the structure whose characteristic is shown by the solid line D. Further, dashed line F shows the characteristic in a case in which a structure, in which a dynamic damper is not provided at the headrest, is applied. The structure relating to present embodiment has an improved NV performance even when compared with both the structure in which a dynamic damper is not provided at the headrest and a structure in which a dynamic damper having one mass body is provided at the headrest.

Note that, in a case in which it is fine for the NV performance of the structure relating to the present embodiment to be a similar level as the NV performance of the structure whose characteristic is shown by the two-dot chain line E, it suffices of the sum of the respective masses of the first mass body and the second mass body to be less than the mass of the mass body in the structure whose characteristic is shown by the two-dot chain line E. Accordingly, lightening of the weights of the mass bodies and a reduction in the materials costs are possible.

Further, in the present embodiment, the headrest pad 20 shown in Fig. 3 has the first urethane 30, that is elastically deformable and that supports the first mass body 40 and the second mass body 42, and has the second urethane 32 whose elastic coefficient is higher than that of the first urethane 30. Therefore, at the time of a rear collision, owing to the second urethane 32, the supporting rigidity of the headrest 14 with respect to the head portion of the vehicle occupant is increased, and the respective amplitudes of the first mass body 40 and the second mass body 42 also are suppressed. Further, due to the latter, load to the neck portion of the vehicle occupant, that is caused by respective vibrations of the first mass body 40 and the second mass body 42 in the seat longitudinal direction, is reduced.

In the present embodiment, in cases in which the headrest 14 vibrates in the seat longitudinal direction at times when the seat vibrates usually, the first mass body 40 is displaced while elastically deforming the first overlap portions 30A, 30B, and the second mass body 42 is displaced while elastically deforming the second overlap portions 30C, 30D. For these reasons, the vibrations are damped. On the other hand, in a case in which the first mass body 40 starts to vibrate in the seat longitudinal direction at an amplitude that is greater than or equal to the amplitude at times when the seat vibrates usually, the third overlap portions 32A, 32B suppress the vibration of the first mass body 40. Further, in a case in which the second mass body 42 starts to vibrate in the seat longitudinal direction at an amplitude that is greater than or equal to the amplitude at times when the seat vibrates usually, the fourth overlap portions 32C, 32D suppress the vibration of the second mass body 42. For these reasons, at the time of a rear collision, the respective amplitudes of the first mass body 40 and the second mass body 42 in the seat longitudinal direction are effectively suppressed, and therefore, the load on the neck portion of the vehicle occupant, that is caused by respective vibrations of the first mass body 40 and the second mass body 42 in the seat longitudinal direction, is reduced effectively.

Further, in the present embodiment, the first urethane 30 covers the entire peripheries of the respective peripheral edges the first mass body 40 and the second mass body 42. Therefore, setting of the frequency characteristic of the dynamic damper 28 is easy as compared with a structure in which, for example, the first mass body 40 and the second mass body 42 are covered by the first urethane 30 and the second urethane 32. Namely, seat vibrations are suppressed by setting the frequency characteristic of the dynamic damper 28 by adjusting the respective masses the first mass body 40 and the second mass body 42, or the rigidity, the volume, the shape or the like of the first urethane 30, such that the dynamic damper 28 works in the frequency band of seat vibrations for which suppression is desired.

As described above, in accordance with the present embodiment, load to the neck portion of a vehicle occupant at the time of a rear collision can be reduced while the NV performance is ensured.

### [Modified Example of First Embodiment]

Note that, as a modified example of the first embodiment, the respective resonance frequencies of the first mass body and the second mass body may be set to different values by making the respective masses of the first mass body and the second mass body, that are supported by the first urethane 30 (the first cushion material), be the same and changing the elastic coefficients of the regions that support the first mass body and the second mass body. In order to change the elastic coefficients of the regions that support the first mass body and the second mass body, for example, it suffices to change the surface area of contact between the first urethane 30 and the first mass body and the surface area of contact between the first urethane 30 and the second mass body.

Here, a method of joining a portion of the first mass body to the first urethane 30, and a method of joining a portion of the second mass body to the first urethane 30, are described. Note that, in the description here, the first mass body and the second mass body are referred to collectively as the mass bodies.

As a method of joining portions of the mass bodies to the first urethane 30, for example, there is a method in which, in a state in which cloth bodies cover portions of the mass bodies, the raw material of the first urethane 30 is supplied to the peripheries of the mass bodies and integrally foamed, and thereafter, the cloth bodies are pulled-off and are removed from the outer peripheries of the mass bodies. In this method, at the portions that were covered by the cloth bodies, the mass bodies and the first urethane 30 are not joined, and gaps are formed between the both. Note that the aforementioned cloth bodies do not have to be pulled-off, and, instead of the aforementioned cloth bodies, felt, papers, seals, or the like may be applied. Further, in a state in which portions of the mass bodies are grasped by tweezers (tools), the raw material of the first urethane 30 may be supplied to the peripheries of the mass bodies and foamed integrally, and thereafter, the tweezers may be pulled-away and removed from the outer peripheries of the mass bodies.

Further, as another method of joining portions of the mass bodies to the first urethane 30, oil, wax or the like may be coated on the portions of the mass bodies that are not to be joined, and thereafter, the raw material of the first urethane 30 may be supplied to the peripheries of the mass bodies and foamed integrally. With this method, the manufacturing steps can be simplified and the materials costs also can be reduced, as compared with a method using cloth bodies or the like. Further, in a case of carrying out manufacturing by this method, portions of the mass bodies and the first urethane 30 are in states of contacting without being joined. At the regions that are in states of contact without being joined, spring force in the shearing direction does not work, but spring force in a compressing direction works even with respect to minute vibrations.

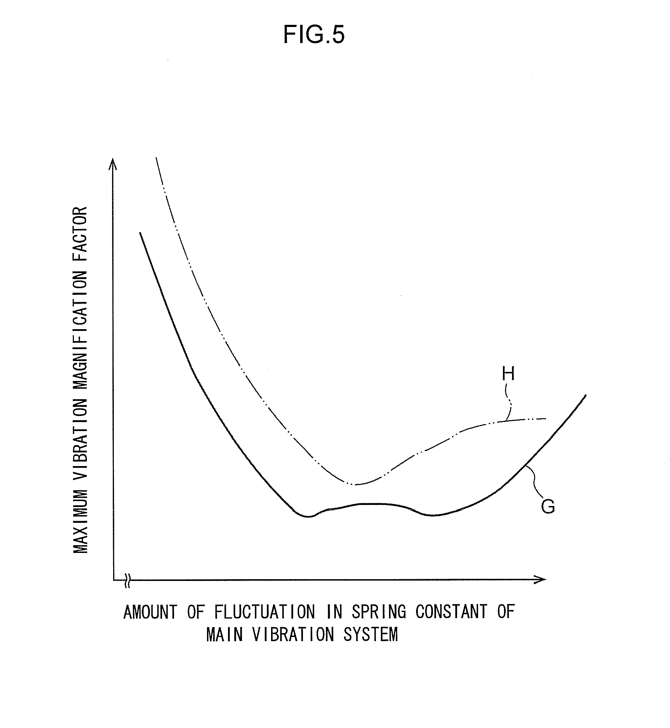

A graph that compares the robustness in a case of applying the structure relating to the above-described modified example of the first embodiment and in a case of applying the comparative structure, is shown in Fig. 5. Note that the maximum vibration magnification factor is plotted on the vertical axis, and the amount of fluctuation in the spring constant of the main vibration system (the seat skeleton portion of the vehicle seat) is plotted on the horizontal axis. Solid line G shows the characteristic in the case in which the above-described modified example is applied. In contrast, two-dot chain line H shows the characteristic in the case in which a structure, in which one mass body is disposed instead of the first mass body and the second mass body (the structure whose characteristic is shown by the two-dot chain line E of Fig. 4), is applied. In the structure relating to the modified example of the first embodiment, the region in which the maximum vibration magnification factor is low is broad, and the robustness of the amplitude level reducing effect is high, as compared with the structure having the dynamic damper that is provided with one mass body.

### [Second Embodiment]

A second embodiment of the present invention is described next. The headrest pad 20, that is applied to the first embodiment shown in Fig. 1 and the like, is structured by the first urethane 30 and the second urethane 32 whose elastic coefficients differ from one another. However, the headrest pad that is applied to the second embodiment is structured by one type of foamed urethane. The other structures are structures similar to the first embodiment.

Namely, although not illustrated, the headrest pad of the second embodiment is disposed at the inner side of the headrest skin and is elastically deformable, in the same way as the first embodiment. Further, the first mass body (40) and the second mass body (42) are supported at this headrest pad, and the second mass body (42) is disposed apart from the first mass body (40).

In accordance with this structure as well, seat vibrations are suppressed by setting the frequency characteristic of the dynamic damper (28). Further, at the time of a rear collision, the amplitudes of the first mass body (40) and the second mass body (42) in the seat longitudinal direction are respectively suppressed due to the lowering of the respective inertial forces of the first mass body (40) and the second mass body (42). Accordingly, in the second embodiment as well, load to the neck portion of the vehicle occupant at the time of a rear collision can be reduced while the NV performance is ensured.

### [Supplementary Description of Embodiments]

Note that, in the above-described embodiment, the headrest 14 is provided with the two mass bodies that are the first mass body 40 and the second mass body 42. However, the headrest may be provided with three or more mass bodies including the first mass body and the second mass body, and may be structured such that these mass bodies are disposed apart from one another. Namely, in addition to the first mass body and the second mass body, the headrest may be provided with, for example, a third mass body that is supported by the headrest pad and is disposed apart from the first mass body and the second mass body.

Further, as a modified example of the above-described embodiment, one or both of the first mass body and the second mass body may be disposed so as to not be embedded in the headrest pad so as to, for example, be provided at the upper end portion of the headrest pad and be disposed so as to be partially exposed from the headrest pad, or the like.

Further, as a modified example of the above-described embodiment, at least one of the first cushion material and the second cushion material may be made to be another cushion material such as, for example, a resin foamed body other than urethane, or felt, rubber, or the like.

Further, as a modified example of the above-described embodiment, the first mass body and the second mass body may be disposed so as to be apart in the seat vertical direction. In such a structure as well, the respective inertial forces of the first mass body and the second mass body can be made to be small, and therefore, the displacement of the first mass body and the second mass body at the time of a rear collision is suppressed.

Further, as a modified example of the above-described embodiment, the product of the mass of the first mass body and the distance from the center of gravity of the headrest to the center of gravity of the first mass body, and the product of the mass of the second mass body and the distance from the center of gravity of the headrest to the center of gravity of the second mass body, can also be set so as to not be equivalent.

Further, as a modified example of the above-described embodiment, the respective masses of the first mass body and the second mass body may be set to be the same. Further, the respective resonance frequencies of the first mass body and the second mass body may be set to different values by setting the respective masses of the first mass body and the second mass body to be the same and changing the elastic coefficients of the regions that respectively support the first mass body and the second mass body.

Further, as a modified example of the above-described embodiment, the respective resonance frequencies of the first mass body and the second mass body, that are respectively supported by the headrest, may be set to be the same.

Further, a structure, in which the first cushion material does not have at least one of the first overlap portion and the second overlap portion, also can be employed as a modified example of the above-described embodiment. Further, a structure, in which the second cushion material does not have at least one of the third overlap portion and the fourth overlap portion, also can be employed. Further, the first overlap portion and the third overlap portion may respectively be set at only either one side of the seat front side and the seat rear side of the first mass body. Similarly, the second overlap portion and the fourth overlap portion may respectively be set at only either one side of the seat front side and the seat rear side of the second mass body.

Further, as a modified example of the above-described embodiment, a portion of the peripheral edge of the first mass body may be covered by the first cushion material, and another portion of the peripheral edge of this first mass body may be covered by the second cushion material. Further, a portion of the peripheral edge of the second mass body may be covered by the first cushion material, and another portion of the peripheral edge of this second mass body may be covered by the second cushion material.

Moreover, the concept of "equivalent" that is recited in the third aspect of the present invention includes cases of "the same" as in the above-described embodiment, and in addition, also includes cases that are substantially the same and cannot be strictly said to be the same, but that can obtain operation/effects that are similar to those of cases of "the same" and can be interpreted as being substantially "equivalent".

Moreover, the concept of "covers an entire periphery of a peripheral edge of the mass body (the first mass body, the second mass body)" in the seventh aspect of the present invention includes cases in which the peripheral edges of the mass bodies (the first mass body 40, the second mass body 42) are covered over the entire peripheries thereof as in the above-described embodiment, and in addition, also includes cases in which, although the peripheral edges of the mass bodies (the first mass body, the second mass body) are covered over substantially the entire peripheries thereof, portions that are not covered locally exist, and it cannot be strictly said that the peripheral edges of the mass bodies (the first mass body, the second mass body) are covered over the entire peripheries thereof, but that can obtain operation/effects that are similar to those of cases in which the peripheral edges of the mass bodies (the first mass body, the second mass body) are covered over the entire peripheries thereof and can be interpreted as substantially the entire peripheries of the peripheral edges of the mass bodies (the first mass body, the second mass body) being covered.

Note that the above-described embodiment and above-described plural modified examples can be implemented by being combined appropriately.

Examples of the present invention have been described above, but the present invention is not limited to the above, and, other than the above, can of course be embodied by being modified in various ways within a scope that does not depart from the gist thereof.

Note that the disclosure of Japanese Patent Application No. 2012-211327 is, in its entirety, incorporated by reference into the present Description.

## Claims

1. A headrest comprising:
a headrest pad that is disposed at an inner side of a headrest skin and that is elastically deformable;
a first mass body that is supported by the headrest pad; and
a second mass body that is supported by the headrest pad, and that is disposed apart from the first mass body.

2. The headrest of Claim 1, wherein the first mass body and the second mass body are disposed lined-up apart at left and right sides in a seat transverse direction with respect to a seat transverse direction central line at the headrest.

3. The headrest of Claim 2, wherein a product of mass of the first mass body and a distance from a center of gravity of the headrest to a center of gravity of the first mass body, and a product of mass of the second mass body and a distance from the center of gravity of the headrest to a center of gravity of the second mass body, are set to be equivalent.

4. The headrest of any one of Claim 1 through Claim 3, wherein respective resonance frequencies of the first mass body and the second mass body, that are respectively supported by headrest pad, differ.

5. The headrest of any one of Claim 1 through Claim 4, wherein the headrest pad has a first cushion material that supports the first mass body and the second mass body and is elastically deformable, and a second cushion material whose elastic coefficient is higher than that of the first cushion material.

6. The headrest of Claim 5, wherein:
the first cushion material has a first overlap portion that is set at a position that overlaps the first mass body as seen in a seat front view, and a second overlap portion that is set at a position that overlaps the second mass body as seen in a seat front view, and
the second cushion material has a third overlap portion that is set at a position that overlaps the first mass body and the first overlap portion as seen in a seat front view, and a fourth overlap portion that is set at a position that overlaps the second mass body and the second overlap portion as seen in a seat front view.

7. The headrest of Claim 5 or Claim 6, wherein the first cushion material covers an entire periphery of a peripheral edge of the first mass body, and covers an entire periphery of a peripheral edge of the second mass body.

8. A vehicle seat comprising:
a seat cushion on which a vehicle occupant sits;
a seat back that is supported at a rear end portion of the seat cushion; and
the headrest of any one of Claim 1 through Claim 7 that is disposed at an upper end portion of the seat back and supports a head portion of the vehicle occupant.
